# EUROPEAN PATENT APPLICATION

(11) **EP 3 492 617 A1**
(43) Date of publication of application: **05.06.2019**
(21) Application number: 18209097.7
(22) Date of filing: 29.11.2018
(51) Int. Cl.: C22C 38/02, C22C 38/04, C22C 38/06, C22C 38/40, C22C 38/50, C22C 38/58, B33Y 10/00, B22F 3/00, B22F 3/105, B23K 15/00, B23P 23/00, B33Y 80/00, B33Y 70/00, B33Y 30/00, B33Y 50/02, B23K 26/342, B23K 35/30, B23K 26/00, B23K 101/22, B23K 101/32, B23K 103/04

(54) **METHODS AND COMPOSITIONS FOR MAKING A NEAR NET SHAPE ARTICLE**

(30) Priority: 29.11.2017 US 201762592045 P; 13.11.2018 US 201816189123
(71) Applicant: Lincoln Global, Inc., Santa Fe Springs, CA 90670 (US)
(72) Inventor: NARAYANAN, Badri K., Highland Heights, OH Ohio 44143 (US); KOTTMAN, Michael A., Cleveland, OH Ohio 44102 (US)
(74) Representative: Grosse Schumacher Knauer von Hirschhausen

(57) **Abstract**

Methods and compositions for making a near net shape article are provided. The method includes depositing a first wire material using a wire fed additive manufacturing technique to form a near net shape article. The first wire material may be a Cr/Ni-rich composition or a Cr/Mn-rich composition. The additively manufactured near net shape article exhibits minimal distortion and good fatigue strength.

## Description

### CROSS REFERENCE TO RELATED APPLICATIONS

This application claims priority to and the benefit of U.S. Provisional Patent Application No. 62/592,045, filed November 29, 2017, the entire disclosure of which is incorporated herein by reference in full.

### FIELD

The invention relates to a method of making a near net shape article according to the preamble of claim 1. The general inventive concepts thus relate to methods and compositions for making a near net shape article. More particularly, the general inventive concepts relate to additive manufacturing methods for making near net shape articles using a wire formulated with a specific Cr/Ni-rich or Cr/Mn-rich composition.

### BACKGROUND

Additive manufacturing has been utilized to manufacture functional metal parts in various fields of technology including automobiles, aerospace, and medical devices, just to name a few. Unlike conventional manufacturing processes, metal additive manufacturing techniques permit complex geometry and functional part fabrication by adding thin layers of metal based on a digital model (*e*.*g*., a CAD model) without the need for tooling and assembly.

While additive manufacturing of metal parts has numerous advantages over conventional manufacturing processes, there are also drawbacks. A primary drawback is the residual stress that can be generated based on the rapid heating-cooling thermal cycle associated with additively manufacturing metal parts. The residual stress, particularly residual tensile stresses, can cause distortion of the additively manufactured metal part.

Accordingly, there remains a need for metal additive manufacturing methods capable of producing metal parts that exhibit minimal distortion.

### SUMMARY

The invention provides a method of making a near net shape article according to claim 1. The general inventive concepts relate to methods and compositions for making a near net shape article. To illustrate various aspects of the general inventive concepts, several exemplary embodiments of the method and composition are disclosed.

In one exemplary embodiment, a method of making a near net shape article is provided. The method includes depositing a first wire material using a wire fed additive manufacturing technique to form a near net shape article. The first wire material as-deposited comprises a Cr/Ni-rich composition. The as-deposited Cr/Ni-rich composition comprises ≤ 0.06 wt% C, 3-7 wt% Ni, 9-14 wt% Cr, ≤ 1.0 wt% Mn, ≤ 1.0 wt% Si, ≤ 0.05 wt% Ti, ≤ 0.05 wt% Al, ≤ 0.05 wt% S, with the balance being Fe and incidental impurities.

In one exemplary embodiment, a method of making a near net shape article is provided. The method includes depositing a first wire material using an additive manufacturing technique to form a near net shape article. The first wire material as-deposited comprises a Cr/Mn-rich composition. The as-deposited Cr/Mn-rich composition comprises ≤ 0.1 wt% C, ≤ 1.0 wt% Ni, 8.0-13.0 wt% Cr, 4.0-10.0 wt% Mn, ≤ 1.0 wt% Si, ≤ 0.05 wt% Ti, ≤ 0.05 wt% Al, ≤ 0.05 wt% S, with the balance being Fe and incidental impurities.

Other aspects, advantages, and features of the general inventive concepts will become apparent to those skilled in the art from the following detailed description and claims.

### DETAILED DESCRIPTION

While the general inventive concepts are susceptible of embodiment in many different forms, there will be described herein in detail, specific embodiments thereof with the understanding that the present disclosure is to be considered as an exemplification of the principles of the general inventive concepts. Accordingly, the general inventive concepts are not intended to be limited to the specific embodiments illustrated herein.

The present description discloses exemplary methods and compositions for making a near net shape article. The exemplary methods and compositions provide near net shape articles that exhibit minimal distortion. As used herein, the term "distortion" characterizes how accurate the near net shape article is built compared to its design. Thus, a near net shape article that exhibits minimal distortion (*e*.*g*., less than 5%, less than 4%, less than 3%, less than 2%, less than 1%, less than 0.5%, less than 0.25%, less than 0.1%, or less than 0.05% distortion) has dimensions that are very close to the intended design. Generally, the amount of distortion that is considered reasonable in the art will depend on the size and aspect ratio of the article.

In accordance with the present disclosure, a method of making a near net shape article is provided. The method includes depositing a first wire material using a wire fed additive manufacturing technique to form a near net shape article. In one exemplary embodiment, the first wire material as-deposited comprises a Cr/Ni-rich composition. In another exemplary embodiment, the first wire material as-deposited comprises a Cr/Mn-rich composition. Because of their metallurgy, the as-deposited compositions of the present disclosure exhibit a Low Temperature Transformation (LTT) temperature (low martensite transformation temperature) in the range of 150°C to 300°C. As a result, the as-deposited compositions of the present disclosure create sufficient residual compressive stresses that can compensate for residual tensile stresses. Accordingly, the methods and compositions of the present disclosure can be utilized to create near net shape articles that exhibit minimal distortion and good fatigue strength, even without subjecting the near net shape articles to a post-deposition heat treatment.

Conventionally, to achieve minimal distortion and good fatigue strength, metal articles made from conventional wires/electrodes require a heat treatment to relieve internal tensile stresses. In some instances, such post-deposition heat treatments are difficult and/or ineffective due to the physical inaccessibility of portions of the deposited material. This problem is avoided in connection with embodiments of the present disclosure because the as-deposited compositions disclosed herein exhibit sufficient compressive stresses that can compensate for tensile stresses due to their metallurgy. Therefore, the LTT wire materials of the present disclosure can be utilized to create near net shape articles that exhibit minimal distortion and good fatigue strength without the time and cost associated with extensive post-deposition heat treatments.

As mentioned above, the methods of the present disclosure include depositing a first wire material using a wire fed additive manufacturing technique to form a near net shape article. A variety of wire fed additive manufacturing techniques may be used in accordance with the present disclosure. Exemplary wire fed additive manufacturing techniques include, but are not limited to, laser wire metal deposition, wire arc additive manufacturing, and electron beam additive manufacturing. Accordingly, in embodiments of the present disclosure, the wire fed additive manufacturing technique comprises one or more of laser wire metal deposition (laser beam energy source), wire arc additive manufacturing (electrical arc energy source), and electron beam additive manufacturing (electron beam energy source). Automated welding systems may also be utilized.

In general, conventional wire fed additive manufacturing apparatus can be configured to build articles, for example, a part, in a layer-by-layer manner by feeding a wire feedstock material, which is fed by a wire feeding apparatus and melting the wire feedstock material. Prior to physically building up the article, the additive manufacturing process often begins with the creation of a computer aided design (CAD) file to represent an image or drawing of a desired article. Using a computer, information about this article image file is extracted, such as by identifying information corresponding to individual layers of the article. Thus, to derive data needed to form an article by additive manufacturing, conceptually the article is sliced into a large number of thin layers with the contours of each layer being defined by a plurality of line segments or data points connected to form polylines. The layer data may be converted to suitable tool path data, such as data that is manipulated by or in the form of computer numerical control (CNC) codes, such as G-codes, M-codes, or the like. These codes may be utilized to control the wire fed additive manufacturing apparatus for building an article layer-by-layer.

The wire feedstock material used to build the article is melted using an energy source, which may be, for example, an electron beam, a laser beam, or an electrical arc. The building of the article may be performed on a build substrate. The energy source melts the wire feedstock material to form a melt pool, which solidifies to form at least a portion of the part. The wire fed additive manufacturing apparatus, the substrate, or both may be raised, lowered, or otherwise moved, while melting the wire feedstock material on any portion of the substrate, and/or on a previously solidified part until the article is completely built up from a plurality of layers formed from the melted wire feedstock material. The energy source is typically controlled by a computer system that includes a processor and a memory. The computer system determines a predetermined path for each melt pool and subsequently solidified layer to be formed, and the energy source melts the wire feedstock material according to a pre-programmed path. After fabrication of the article is complete, various post-processing procedures may be applied to the article. Post-processing procedures may include the removal of excess melted wire feedstock material, for example, by milling, sanding, or media blasting, or the removal of the article from the build substrate. The article may also be subjected to thermal and chemical post-processing procedures to finish the article if desired.

The first wire material of the present disclosure may have the same structure as conventional metal cored electrodes. For example, the first wire material may include a core formed from a mixture of desired metals and an outer metal sheath surrounding the core. The first wire material of the present disclosure may be made in a conventional way, such as by beginning with a flat metal strip made from an Fe-based alloy appropriate for making a wire material suitable for depositing layers to form an article. The flat metal strip is then formed into a "U" shape, for example, as shown in U.S. Patent No. 2,785,285, U.S. Patent No. 2,944,142, and U.S. Patent No. 3,534,390, after which the metals forming the metal core, as well as any other core fill materials that may optionally be present, are then deposited into the "U." The strip is then closed into a tubular configuration by a series of forming rolls, after which the tube so formed is normally drawn or rolled through a series of dies to reduce its cross-section and set its final diameter.

The first wire material of the present disclosure utilized to form the near net shape article using a wire fed additive manufacturing technique may comprise a Cr/Ni-rich composition or a Cr/Mn-rich composition. The first wire material of the present disclosure is formulated so that the undiluted deposit produced by the first wire material has an as-deposited chemical composition as set forth in Table 1. As appreciated in the art, the undiluted deposit composition of the wire material is the composition of the deposit produced without contamination from any other source.

**TABLE 1: As-Deposited Composition, wt.%**

| **Ingredient** | **Cr/Ni-Rich Composition** | | | **Cr/Mn-Rich Composition** | | |
|---|---|---|---|---|---|---|
| | **Good** | **Better** | **Best** | **Good** | **Better** | **Best** |
| Carbon | ≤ 0.06 | ≤ 0.05 | ≤ 0.045 | ≤ 0.10 | ≤ 0.09 | ≤ 0.085 |
| Nickel | 3-7 | 4-6 | 4.5-5 | ≤ 1 | ≤ 0.5 | ≤ 0.1 |
| Chromium | 9-14 | 10.5-13 | 11.5-12.6 | 8-13 | 9.5-12 | 10.5-11.5 |
| Manganese | ≤ 1 | ≤ 0.85 | ≤ 0.70 | 4-10 | 5-8.5 | 6-7.5 |
| Silicon | ≤ 1 | ≤ 0.7 | ≤ 0.4 | ≤ 1 | ≤ 0.6 | ≤ 0.35 |
| Titanium | ≤ 0.05 | ≤ 0.03 | ≤ 0.015 | ≤ 0.05 | ≤ 0.03 | ≤ 0.015 |
| Aluminum | ≤ 0.05 | ≤ 0.035 | ≤ 0.025 | ≤ 0.05 | ≤ 0.035 | ≤ 0.025 |
| Sulfur | ≤ 0.05 | ≤ 0.035 | ≤ 0.025 | ≤ 0.05 | ≤ 0.035 | ≤ 0.025 |
| Iron | balance | balance | balance | balance | balance | balance |

In embodiments, the first wire material of the present disclosure is a Cr/Ni-rich composition, wherein the as-deposited Cr/Ni-rich composition comprises 0.03-0.055 wt% C, 4.5-5.5 wt% Ni, 12-13.5 wt% Cr, 0.5-0.7 wt% Mn, 0.25-0.4 wt% Si, 0.004-0.011 wt% Ti, 0.01-0.02 wt% Al, 0.01-0.02 wt% S, with the balance being Fe and incidental impurities. In embodiments, the first wire material of the present disclosure is a Cr/Mn-rich composition, wherein the as-deposited Cr/Mn-rich composition comprises 0.07-0.9 wt% C, 0.01-0.7 wt% Ni, 10.5-11.5 wt% Cr, 6-7.5 wt% Mn, 0.15-0.3 wt% Si, 0.004-0.011 wt% Ti, 0.01-0.02 wt% Al, 0.01-0.02 wt% S, with the balance being Fe and incidental impurities.

The undiluted deposits of the first wire material of the present disclosure, both the Cr/Ni-rich composition and the Cr/Mn-rich composition, exhibit a desirable combination of properties in their as-deposited condition. For example, the as-deposited compositions exhibit better compressive stresses when used to create the plurality layers to form the near net shape article due to a low martensite transformation temperature of the as-deposited compositions. To more thoroughly describe the first wire material of the present disclosure, the chemical composition of two wire materials suitable for use as the first wire material of the present disclosure (a Cr/Ni-rich wire and a Cr/Mn-rich wire) are set forth in Table 2, in terms of their undiluted, as-deposited composition. The minimal distortion and fatigue strength of the as-deposited compositions render these compositions particularly suitable for additively manufacturing near net shape articles, such as tools (e.g., dies, molds, machine tools, cutting tools, gauges, jigs, fixtures) that may be used in various applications. In general, the first wire material of the present disclosure provides as-deposited compositions that are both hard and tough at the same time.

**TABLE 2: As-Deposited Composition, wt.%**

| **Ingredient** | **Cr/Ni-Rich Composition** | **Cr/Mn-Rich Composition** |
|---|---|---|
| Carbon | 0.042 | 0.079 |
| Nickel | 4.7 | 0.03 |
| Chromium | 12.1 | 11.2 |
| Manganese | 0.64 | 6.8 |
| Silicon | 0.31 | 0.25 |
| Titanium | 0.008 | 0.007 |
| Aluminum | 0.015 | 0.014 |
| Sulfur | 0.015 | 0.015 |
| Iron | balance | balance |

As previously mentioned, the methods of the present disclosure include depositing a first wire material using a wire fed additive manufacturing technique to form a near net shape article. In embodiments, the first wire material is preheated before it is deposited via the wire fed additive manufacturing technique. For example, the first wire material may be resistively heated using an appropriate power source before the first wire material is fed to be melted by the energy source (*e*.*g*., electron beam, laser beam, electrical arc) employed by the wire fed additive manufacturing apparatus.

In embodiments, the method of the present disclosure may also include depositing a second wire material in addition to the first wire material using the wire fed additive manufacturing technique to form the near net shape article. In embodiments, the first wire material as-deposited comprises a Cr/Ni-rich composition according to the present disclosure and the second wire material as-deposited comprises a Cr/Mn-rich composition according to the present disclosure. In embodiments, the first wire material as-deposited comprises a Cr/Ni-rich composition according to the present disclosure and the second wire material as-deposited comprises a material selected from a low alloy steel and a stainless steel. In embodiments, the first wire material as-deposited comprises a Cr/Mn-rich composition according to the present disclosure and the second wire material as-deposited comprises a material selected from a low alloy steel and a stainless steel. One example of a low alloy steel suitable for use as the second wire material in accordance with the present disclosure has a chemical composition of about 0.5 wt% C, about 1.5 wt% Mn, about 0.4 wt% Si, about 1.9 wt% Ni, about 0.4 wt% Mo, about 0.1 wt% Cu, about 0.02 wt% Ti, and the balance being Fe and incidental impurities. Exemplary stainless steels suitable for use as the second wire material in accordance with the present disclosure include, but are not limited to, 316L stainless steel, 316LSi stainless steel, 316LCF stainless steel, 309L stainless steel, 309LSi stainless steel, 308H stainless steel, 308L stainless steel, 308LSi stainless steel, and 308LCF stainless steel.

In embodiments, the method of the present disclosure may further comprise applying a subtractive manufacturing technique after depositing one or more layers of the first wire material. In embodiments, the method of the present disclosure may further comprise applying a subtractive manufacturing technique after depositing each layer of the first wire material. In embodiments, the method of the present disclosure may further comprise applying a subtractive manufacturing technique after depositing each layer of the first wire material and each layer of a second wire material. A variety of subtractive manufacturing techniques may be utilized in the methods of the present disclosure. Exemplary subtractive manufacturing techniques include, but are not limited to, milling, turning, and drilling. Such subtractive manufacturing techniques are well known to those skilled in the art and may be carried out using a conventional CNC machine. Accordingly, in embodiments of the present disclosure that include the application of a subtractive manufacturing technique, the subtractive manufacturing technique comprises one or more of milling, turning, and drilling.

As mentioned above, due to the metallurgy of the first wire material, the near net shape articles formed using the methods of the present disclosure exhibit sufficient residual compressive stresses that can compensate for residual tensile stresses, which mitigates distortion of the near net shape article and promotes better fatigue strength of the near net shape article. Thus, post-deposition (or post-build) heat treatments may not be required to relieve internal residual stresses. Accordingly, in embodiments of the method of the present disclosure, the near net shape article is not subjected to a post-deposition heat treatment. Such embodiments provide the advantage of avoiding the time and cost associated with extensive post-deposition heat treatments.

All percentages, parts, and ratios as used herein, are by weight of the total composition, unless otherwise specified. All such weights as they pertain to listed ingredients are based on the active level and, therefore, do not include solvents, impurities or by-products that may be included in commercially available materials, unless otherwise specified.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

All ranges and parameters, including but not limited to percentages, parts, and ratios, disclosed herein are understood to encompass any and all sub-ranges assumed and subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more (*e*.*g*., 1 to 6.1), and ending with a maximum value of 10 or less (*e*.*g*., 2.3 to 9.4, 3 to 8, 4 to 7), and finally to each number 1, 2, 3, 4, 5, 6, 7, 8, 9, and 10 contained within the range.

The methods and compositions of the present disclosure can comprise, consist of, or consist essentially of the essential elements and limitations of the disclosure as described herein, as well as any additional or optional ingredients, components, or limitations described herein.

The compositions of the present disclosure may also be substantially free of any optional or selected essential ingredient or feature described herein, provided that the remaining composition still contains all of the required ingredients or features as described herein. In this context, and unless otherwise specified, the term "substantially free" means that the selected composition contains less than a functional amount of the optional ingredient, typically less than 0.1% by weight, and also including zero percent by weight of such optional or selected essential ingredient.

To the extent that the terms "include," "includes," or "including" are used in the specification or the claims, they are intended to be inclusive in a manner similar to the term "comprising" as that term is interpreted when employed as a transitional word in a claim. Furthermore, to the extent that the term "or" is employed (*e*.*g*., A or B), it is intended to mean "A or B or both A and B." When the Applicant intends to indicate "only A or B but not both," then the term "only A or B but not both" will be employed. Thus, use of the term "or" herein is the inclusive, and not the exclusive use. In the present disclosure, the words "a" or "an" are to be taken to include both the singular and the plural. Conversely, any reference to plural items shall, where appropriate, include the singular.

In some embodiments, it may be possible to utilize the various inventive concepts in combination with one another. Additionally, any particular element recited as relating to a particularly disclosed embodiment should be interpreted as available for use with all disclosed embodiments, unless incorporation of the particular element would be contradictory to the express terms of the embodiment. Additional advantages and modifications will be readily apparent to those skilled in the art. Therefore, the disclosure, in its broader aspects, is not limited to the specific details presented therein, the representative apparatus, or the illustrative examples described. Accordingly, departures may be made from such details without departing from the spirit or scope of the general inventive concepts.

The scope of the general inventive concepts presented herein are not intended to be limited to the particular exemplary embodiments shown and described herein. From the disclosure given, those skilled in the art will not only understand the general inventive concepts and their attendant advantages, but will also find apparent various changes and modifications to the methods and compositions disclosed. It is sought, therefore, to cover all such changes and modifications as fall within the spirit and scope of the general inventive concepts, as described and/or claimed herein, and any equivalents thereof.

The scope of the claims presented herein are not limited in any way by the description and exemplary embodiments of the present disclosure. In addition, the ordinary meanings of the terms used throughout the present disclosure are not limited in any way by the description and exemplary embodiments presented herein. All of the terms presented throughout the present disclosure retain all of their many potential ordinary meanings.

## Claims

1. A method of making a near net shape article, the method comprising:
depositing a first wire material using a wire fed additive manufacturing technique to form a near net shape article,
**characterized in that** the first wire material as-deposited comprises a Cr/Ni-rich composition,
wherein the as-deposited Cr/Ni-rich composition comprises:
≤ 0.06 wt% C;
3-7 wt% Ni;
9-14 wt% Cr;
≤ 1 wt% Mn;
≤ 1 wt% Si;
≤ 0.05 wt% Ti;
≤ 0.05 wt% Al;
≤ 0.05 wt% S;
with the balance being Fe and incidental impurities.

2. The method according to claim 1, wherein the as-deposited Cr/Ni-rich composition comprises:
≤ 0.05 wt% C;
4-6 wt% Ni;
10.5-13 wt% Cr;
≤ 0.85 wt% Mn;
≤ 0.7 wt% Si;
≤ 0.03 wt% Ti;
≤ 0.035 wt% Al;
≤ 0.035 wt% S;
with the balance being Fe and incidental impurities.

3. The method according to claim 1, wherein the as-deposited Cr/Ni-rich composition comprises:
≤ 0.045 wt% C;
4.5-5 wt% Ni;
11.5-12.6 wt% Cr;
≤ 0.7 wt% Mn;
0.4 wt% Si;
≤ 0.015 wt% Ti;
≤ 0.025 wt% Al;
≤ 0.025 wt% S;
with the balance being Fe and incidental impurities.

4. A method of making a near net shape article, in particular according to one of the claims 1 to 3, the method comprising:
depositing a first wire material using a wire fed additive manufacturing technique to form a near net shape article,
**characterized in that** the first wire material as-deposited comprises a Cr/Mn-rich composition,
wherein the as-deposited Cr/Mn-rich composition comprises:
≤ 0.1 wt% C;
≤ 1 wt% Ni;
8-13 wt% Cr;
4-10 wt% Mn;
≤ 1 wt% Si;
≤ 0.05 wt% Ti;
≤ 0.05 wt% Al;
≤ 0.05 wt% S;
with the balance being Fe and incidental impurities.

5. The method according to claim 4, wherein the as-deposited Cr/Mn-rich composition comprises:
≤ 0.09 wt% C;
≤ 0.5 wt% Ni;
9.5-12 wt% Cr;
5-8.5 wt% Mn;
≤ 0.6 wt% Si;
≤ 0.03 wt% Ti;
≤ 0.035 wt% Al;
≤ 0.035 wt% S;
with the balance being Fe and incidental impurities.

6. The method according to claim 5, wherein the as-deposited Cr/Mn-rich composition comprises:
≤ 0.085 wt% C;
0.1 wt% Ni;
10.5-11.5 wt% Cr;
6-7.5 wt% Mn;
≤ 0.35 wt% Si;
≤ 0.015 wt% Ti;
≤ 0.025 wt% Al;
≤ 0.025 wt% S;
with the balance being Fe and incidental impurities.

7. The method according to one of the claims 1 to 6, wherein the wire fed additive manufacturing technique comprises one or more of laser wire metal deposition, wire arc additive manufacturing, and electron beam additive manufacturing.

8. The method according to one of the claims 1 to 7, wherein the first wire material is preheated.

9. The method according to one of the claims 1 to 8, further comprising applying a subtractive manufacturing technique after depositing each layer of the first wire material.

10. The method according to one of the claims 1 to 9, wherein the subtractive manufacturing technique comprises one or more of milling, turning, and drilling.

11. The method according to one of the claims 1 to 10, wherein the near net shape article is not subjected to a post-deposition heat treatment.
